# EUROPEAN PATENT SPECIFICATION

(11) **EP 1 644 238 B1**
(45) Date of publication and mention of the grant of the patent: **26.11.2008**
(21) Application number: 04755941.4
(22) Date of filing: 23.06.2004
(51) Int. Cl.: B62D 29/00

(54) **EXPANDABLE MATERIAL**
AUFSCHÄUMBARES MATERIAL
MATERIAU EXPANSIBLE

(30) Priority: 26.06.2003 US 482897 P; 26.06.2003 US 482896 P; 15.06.2004 US 867835; 22.06.2004 US 873935
(43) Date of publication of application: 12.04.2006
(60) Divisional application: 07003645.4
(73) Proprietor: Zephyros Inc., Romeo, MI 48065 (US)
(72) Inventor: KASSA, Abraham, Shelby Township, MI 48316 (US); HARTHCOCK, Matthew, Oakland Township, MI 48306 (US); APFEL, Jeffrey, Shelby Township, MI 48315 (US); LARSEN, Douglas, C., Highland, MI 48357 (US); KLEINO, Thomas, D., Rochester Hills, MI 48307 (US); BARZ, William, J., St. Clair, MI 48079 (US)
(74) Representative: Bawden, Peter Charles
(86) International application number: PCT/US2004/020112
(87) International publication number: WO 2005/002950

(56) References cited:
- EP-A- 0 383 498
- EP-A- 0 893 332
- EP-A- 1 122 152
- EP-A- 1 149 679
- WO-A-01/19667
- WO-A-98/36944
- GB-A- 903 146
- US-A- 5 766 719
- US-A- 6 068 922
- US-A- 6 131 897
- US-A1- 2003 045 620
- US-B1- 6 270 600
- US-B1- 6 455 146
- US-B2- 6 546 693

## Description

### FIELD OF THE INVENTION

The present invention relates generally to expandable material that exhibits a property such as substantially homogeneous expansion, a high level of expansion, improved cohesiveness, a combination thereof or the like and also relates to a member, which is employed for providing sealing, noise/vibration reduction, structural reinforcement or a combination thereof.

### BACKGROUND OF THE INVENTION

For many years, industry and particularly the transportation industry, has been concerned with designing members for providing baffling, sealing, structural reinforcement or the like to automotive vehicles. For example, United States Patent Nos. 5,755,486; 4,901,500; and 4,751,249, describe exemplary prior art devices for baffling, sealing or reinforcing.

The members typically include an expandable material, which may or may not be combined with other components for forming a seal, a baffle, a structural reinforcement or the like in a cavity of an automotive vehicle. Often times, however, assembly of such members to the automotive vehicles or other articles of manufacture can present difficulties. Moreover, difficulties can be presented when designing a member that can applied to various locations of an article of manufacture or various different articles of manufacture. Thus, the present invention seeks to provide a member for baffling, sealing or reinforcing that overcomes one of these difficulties or provides other advantages, which will become apparent upon reading the detailed description of the invention.

Moreover, the transportation industry and, particularly, the automotive industry has been concerned with designing expandable materials that exhibit characteristics such as low weight, good adhesion, sound absorption, sound damping, relatively high levels of expansion, homogeneous expansion, consistent or predictable expansion or other desired characteristics. Design of such materials with two or more of these characteristics can present difficulties however. For example, it can be difficult to provide an expandable material that exhibits a relatively high level of expansion without sacrificing characteristics such as adhesion, homogeneity of expansion or the like. Thus, the present invention seeks to provide an expandable material that exhibits at least one desired characteristic without significantly sacrificing the presence of at least one other desired characteristic.

WO 98/36944 discloses an expandable material according to the preamble of claim 1.

### SUMMARY OF THE INVENTION

The present invention is related to a member designed to provide baffling, sealing or reinforcement to an article of manufacture such as an automotive vehicle. The member generally includes a carrier, an expandable material and one or more fasteners. Preferably, the expandable material can be heat activated or otherwise activated to provide the baffling, sealing or reinforcement to the article of manufacture.

The present invention provides the expandable material, of claim 1. One preferred reinforcement material is a pulped form of aramid fiber, which can assist in flow control, sag resistance and/or self-support ability of the material.

The material may be formed according to a variety of protocols. In one preferred method, the various components of the material are intermixed in one or more continuous or batch-type mixing processes or a combination thereof. The material may be applied (e.g., adhered) to a variety of structures, which may be formed of a variety of materials such as aluminum, magnesium, steel, sheet molding compound, bulk molding compound, thermoplastics, combinations thereof or the like. Moreover the material may be employed in a variety of applications such as baffling, sealing, reinforcement of the like.

### BRIEF DESCRIPTION OF THE DRAWINGS

The features and inventive aspects of the present invention will become more apparent upon reading the following detailed description, claims, and drawings, of which the following is a brief description:
Fig. 1 is a perspective view of an exemplary member.
Fig. 2 is a sectional view of the member of Fig. 1 taken along line 2-2.
Fig. 3 is a sectional view of the member of Fig. 1 applied to a structure of an automotive vehicle.
Fig. 4 is a perspective view of another exemplary member.
Fig. 5 is a sectional view of the member of Fig. 4 taken along line 5-5.
Fig. 6 is a sectional view of the member of Fig. 1 applied to a structure of an automotive vehicle;
Fig. 7 is a perspective view of an alternative member;
Fig. 8 is a sectional view of another alternative member;
Fig. 9 is a sectional view of still another alternative member;
Fig. 10 is a sectional view of the member of Fig. 9 applied to a structure of an automotive vehicle.
Figs. 11A-18C illustrate examples of variation of the member.
Fig. 19A is a sectional view of another alternative member.
Fig. 19B is a sectional view of another alternative member.
Fig. 20 is a perspective view of another alternative member.
Fig. 21 is a perspective view of another alternative member.

### DETAILED DESCRIPTION OF THE PREFERRED EMBODIMENT

The present invention is predicated upon the provision of a member for providing baffling, sealing, reinforcing or a combination thereof to an article of manufacture. It is contemplated that the member may be applied (e.g., assembled) to various articles of manufacture such as boat, trains, buildings, appliances, homes, furniture or the like. It has been found, however, that the member is particularly suitable for application to automotive vehicles.

The member typically includes:
a) a carrier;
b) an expandable material disposed upon the carrier; and
c) one or more fasteners, which may be attached to the carrier, the expandable material or both.

The member is typically assembled to an article of manufacture by attaching the one or more fasteners to a portion of the article such that the expandable material is located within a cavity or elsewhere upon the article. Thereafter, the expandable material is typically expanded to provide baffling, sealing or reinforcement to the article. Advantageously, the fasteners, the carrier or both can assist in assembly of the member to an article of manufacture. Moreover, the member can be formed using techniques that are efficient, inexpensive, expedient or a combination thereof.

The carrier may be formed in a variety of shapes and in a variety of configurations. For example, the carrier may be planar or contoured, geometric or non-geometric, continuous or non-continous, flexible or rigid, or otherwise configured. The carrier may also include only a single continuous part or may be formed of multiple parts directly connected to each other or connected through additional components.

The one or more fasteners may also be provided in a variety of shapes and in a variety of configurations as long as they can secure the carrier, the expandable material or both to a structure. Examples of suitable fasteners include mechanical fasteners, clips, snap-fits, screws, combinations thereof or the like. Furthermore, it is contemplated that the one or more fasteners may be formed integral of a singular material with the carrier or may be formed of a different material and may be removably attached to the carrier.

According to one preferred embodiment, the fastener is provided as a magnetic material or an adhesive material that can attach (e.g., adhere or magnetically secure) the carrier and/or the expandable material to a metal or other structure. In such an embodiment, the magnetic material or the adhesive material may be interspersed with the carrier or the expandable material. Alternatively, the magnetic material or the adhesive material may be disposed upon the carrier or the expandable material or may be otherwise connected to the carrier or the expandable material.

The carrier and the one or more fastener may be formed of a variety of materials such as metal, polymers, elastomers, fibrous materials (e.g., cloth or woven materials), combinations thereof or the like. Preferably, the carrier and the one or more fasteners are at least partially formed of a polymeric material (e.g., a thermoplastic, an elastomer, a plastomer, a thermoset material, a plastic, a combination thereof or the like). In one embodiment, it is contemplated that the carrier, the one or more fasteners or both may be formed of the same material although typically they are formed of different materials.

The expandable material may be formed from a variety of suitable materials. Preferably, the expandable material is formed of a heat activated material having foamable characteristics. The material may be generally dry to the touch or tacky and may be shaped in any form of desired pattern, placement, or thickness, but is preferably of substantially uniform thickness. In one embodiment, it is contemplated that the expandable material has a shape substantially similar or identical to a portion of the cavity into which the material is placed, only the expandable material will be substantially smaller (e.g. at least about 100%, 1000%, 2000% or 3000% smaller) than the portion of the cavity until expanded.

Though other heat-activated materials are possible for the expandable material, a preferred heat activated material is an expandable polymer or plastic, and preferably one that is foamable. A particularly preferred material is a relatively high expansion foam having a polymeric formulation that includes one or more of an acrylate, an acetate, an elastomer, a combination thereof or the like. For example, and without limitation, the foam may be an EVA/rubber based material, including an ethylene copolymer or terpolymer that may possess an alpha-olefin. As a copolymer or terpolymer, the polymer is composed of two or three different monomers, i.e., small molecules with high chemical reactivity that are capable of linking up with similar molecules.

A number of baffling or sealing foams are known in the art and may also be used to produce the foam. A typical foam includes a polymeric base material, such as one or more ethylene-based polymers which, when compounded with appropriate ingredients (typically a blowing and curing agent), expands and cures in a reliable and predictable manner upon the application of heat or the occurrence of a particular ambient condition. From a chemical standpoint for a thermally-activated material, the structural foam is usually initially processed as a flowable material before curing, and upon curing, the material will typically cross-link making the material incapable of further flow.

One advantage of the preferred foam materials over prior art materials is that the preferred materials can be processed in several ways. The preferred materials can be processed by injection molding, extrusion compression molding or with a mini-applicator. This enables the formation and creation of part designs that exceed the capability of most prior art materials.

While the preferred materials for fabricating the expandable material has been disclosed, the expandable material can be formed of other materials provided that the material selected is heat-activated or otherwise activated by an-ambient condition (e.g. moisture, pressure, time or the like) and cures in a predictable and reliable manner under appropriate conditions for the selected application. One such material is the epoxy based resin disclosed in U.S. Patent No. 6,131,897. Some other possible materials include, but are not limited to, polyolefin materials, copolymers and terpolymers with at least one monomer type an alpha-olefin, phenol/formaldehyde materials, phenoxy materials, and polyurethane materials with high glass transition temperatures. See also, U.S. Patent Nos. 5,766,719; 5,755,486; 5,575,526; and 5,932,680. In general, the desired characteristics of the material includehigh glass transition temperature (typically greater than 70 degrees Celsius), relatively high expansion and adhesion durability properties. In this manner, the material does not generally interfere with the materials systems employed by automobile manufacturers.

In applications where the expandable material is a heat activated, thermally expanding material, an important consideration involved with the selection and formulation of the material comprising the foam is the temperature at which a material reaction or expansion, and possibly curing, will take place. Typically, the foam becomes reactive at higher processing temperatures, such as those encountered in an automobile assembly plant, when the foam is processed along with the automobile components at elevated temperatures or at higher applied energy levels, e.g., during paint curing steps. While temperatures encountered in an automobile assembly operation may be in the range of about 148.89° C to 204.44°C (about 300°F to 400°F), body and paint shop applications are commonly about 93.33°C (about 200°F) or slightly higher. If needed, blowing agent activators can be incorporated into the composition to cause expansion at different temperatures outside the above ranges. Generally, suitable expandable foams have a range of expansion ranging from approximately 0 to over 1000 percent.

In another embodiment, the expandable material is provided in an encapsulated or partially encapsulated form, which may comprise a pellet, which includes an expandable foamable material, encapsulated or partially encapsulated in an adhesive shell. An example of one such system is disclosed in US 6422 575 B1.

It is contemplated that the expandable material could be delivered and placed into contact with the carrier, through a variety of delivery systems which include, but are not limited to, a mechanical snap fit assembly, extrusion techniques commonly known in the art as well as a mini-applicator technique as in accordance with the teachings of commonly owned U.S. Patent No. 5,358,397 ("Apparatus For Extruding Flowable Materials"). In this non-limiting embodiment, the material or medium is at least partially coated with an active polymer having damping characteristics or other heat activated polymer, (e.g., a formable hot melt adhesive based polymer or an expandable structural foam, examples of which include olefinic polymers, vinyl polymers, thermoplastic rubber-containing polymers, epoxies, urethanes or the like) wherein the foamable or expandable material can be snap-fit onto the chosen surface or substrate; placed into beads or pellets for placement along the chosen substrate or member by means of extrusion; placed along the substrate through the use of baffle technology; a die-cast application according to teachings that are well known in the art; pumpable application systems which could include the use of a baffle and bladder system; and sprayable applications.

Formation of the member may include a variety of processing steps depending on the desired configuration of the member. In any event, it is generally contemplated that the carrier, the fastener and the expandable material may be manually attached to each other, automatically attached to each other or a combination thereof. Moreover, various processes such as molding (e.g., compression, injection or other molding), extrusion or the like may be used to form the carrier, the fastener or the expandable material individually and such processes may be employed to attach these components together.

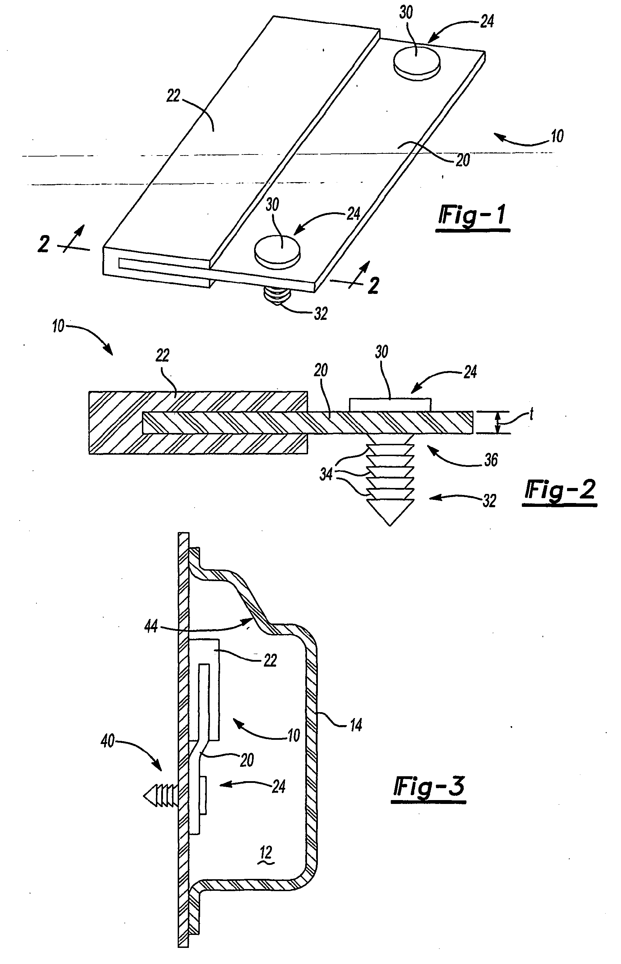

As a first example of a member reference is made to Figs. 1-3, which illustrates an exemplary member 10 configured for placement within a cavity 12 of a structure 14 of an automotive vehicle (not shown) for forming a baffling, sealing or reinforcement system 1 along with the structure 14 of the automotive vehicle. As will be appreciated, the member 10 may be suited for placement in a variety of cavities for reinforcing, baffling or sealing a variety of structures within the automotive vehicle. For purposes of illustration, the member 10 is shown as being assembled to a pillar or rocker structure 14 of an automotive vehicle, although it will be understood that the member 10 may be assembled to a variety of automotive structures (e.g., body members, frame members or the like) or to a variety of structure of other articles of manufacture.

The member 10 has an overall rectangular configuration, but may be formed in a variety of shapes. Generally, the member 10 includes a carrier 20 with an expandable material 22 disposed thereon. The member 10 also includes a pair of fasteners 24 attached to the carrier 20.

The carrier 20 may be formed in any of the shapes or configurations discussed herein and may be formed of any of the materials discussed herein. In the illustrated embodiment, the carrier 20 is generally rectangular and is formed of a polymeric film (e.g., a polyester film). The thickness (t) of the polymeric film shown is preferably below about 1 cm, more preferably below about 0.5 mm and even more preferably below about 0.3 mm, although thickness of the carrier 20 may vary widely for different shapes and applications. The carrier 20 in Figs. 1-3 is generally flexible and has an elongation at break of greater at about 20 °C of greater than about 5%, more preferably greater than about 50 %, even more preferably greater than about 100 %.

Alternative films or layer materials which may be employed in the present invention are disclosed in U.S. Patent No. 6,287,669.

The expandable material 22 may be any of the expandable materials disclosed herein. In the illustrated embodiment, the expandable material 22 is a material that experiences relatively high levels of expansion upon exposures to temperatures of between about 148.89° C to 204.44°C (about 300°F to 400°F) (i.e., temperatures typically experienced in automotive painting or coating operations). Accordingly, the preferred expandable material 22 is configured to have a volumetric expansion of at least about 1500 %, more preferably at least about 2000 %, even more preferably at least about 2500% and still more preferably at least about 3000% its original or unexpanded volume.

The expandable material 22 is generally shaped in a rectangular or block configuration, but may be shaped as needed or desired depending upon the application of the member. In the embodiment shown, the expandable material 22 is disposed upon two opposing surfaces of the carrier 20 and substantially encloses an elongated edge of the carrier 20. Of course, it is contemplated that the material may be otherwise disposed upon the carrier 20 and may be applied to the carrier as a single piece (e.g., strip) or multiple pieces (e.g., strips).

The skilled artisan will be able to think of a variety of fasteners suitable for use in the member 10. Preferred examples have been disclosed herein, however, others may also be employed. The fasteners 24 of the member 10 shown are plastic and include a cap portion 30 and an elongated portion 32. As shown, the elongated portion 32 include a plurality of extensions 34 that are illustrated as conical, but which may be otherwise shaped as desired.

Attachment of the fasteners 24 to the carrier 20 may be accomplished according to any of the techniques described herein or by other techniques. For attachment to the carrier 20 of Figs. 1-3, the elongated portion 32 of each of the fasteners 24 extends into and preferably through an opening 36 (e.g., a through-hole) formed in the carrier 20. In this manner, the extensions 34, the cap 30 or both interference fit the fastener 24 to the carrier 20.

Generally, formation of the member 10 includes shaping of the carrier 20 into a desired configuration, application of the expandable material 22 to the carrier 20 and optionally, depending upon the configuration, attachment of the fasteners 24 to the carrier 20, the expandable material 22 or both. It should be recognized that within this general approach, the member 10 illustrated may be formed using a variety of more specific techniques. For exemplary purposes, however, one preferred technique is described in detail.

According to the preferred technique, material (i.e., film material) for the carrier 20 is provided as an elongated strip to an extrusion die in a continuous or non-continuous manner. At the same time, the expandable material 22 is being emitted from an extruder to the same extrusion die also in a continuous or non-continuous manner. As both the elongated strip and the expandable material are fed to and through the extrusion die (e.g., by coextrusion), the expandable material intimately contacts and adheres to the elongated strip with a sectional configuration as shown in Fig. 2. If desired, the portion of the elongated strip onto which the expandable material is extruded may be perforated (e.g., include one or more through-holes) for improving the strength of attachment between the expandable material and the carrier material.

After extrusion, the strip and the expandable material are preferably cut at predetermined lengths, which correspond to a length of the member 10. Formation of the openings 36 in the carrier 20 or carrier material may be accomplished by cutting, punching or any other suitable technique. The openings 36 for the fasteners 24 may be formed in the carrier 20 or carrier material before or after the extrusion of the expandable material onto the strip of carrier material. Moreover, the fasteners 24 may be inserted into the openings 36 prior to or after extrusion. Depending, upon the order of steps, the member may be completely formed when the elongated strip and expandable material are cut at predetermined lengths or thereafter.

The carrier 20 is assembled to the structure 14 in Fig. 3 by attaching the fasteners 24 to the structure 14. In the particular embodiment illustrated, the elongated portion 32 of each of the fasteners 24 is extended into a respective opening 40 (e.g., cavity, through-hole or the like) in the -structure 14 of the automotive vehicle. Upon insertion, the extensions 34 of the fasteners 24 interference fit the fasteners 24 to the structure 14 thereby securing the fasteners 24, the carrier 20 and the expandable material 22 to the structure 14. Advantageously, as shown in Fig. 3, the flexibility of the carrier 20 allows the carrier to bend or contour to allow attachment of the fasteners 24 to the structure 14. Moreover, it is contemplated that, for structure including contoured surfaces, the carrier can flex or bend to adapt to such surfaces.

Once assembled to the structure 14, the expandable material 22 is exposed to heat, which is preferably, although not necessarily, provided during a coating or painting operation performed upon the automotive vehicle. In turn, the heat activates the expandable material 22 to expand (e.g., foam) such that the expandable material 22 contacts, wets and adheres to surfaces 42, 44, 46 of the structure 14 that define the cavity 12. Thus, a system is formed that includes the structure 14 defining the cavity 12 and including the expandable material 22 in an expanded condition thereby at least partially filling the cavity 12 for sealing, baffling, or reinforcing the structure 14. Preferably, the (e.g., the cross-section shown) expandable material 22 substantially entirely spans the entirety of one or more cross-section of the cavity 12 for sealing the cavity 12 such that no openings are available thereby prohibiting the passage of debris, water, sound, air or a combination thereof through the cavity 12.

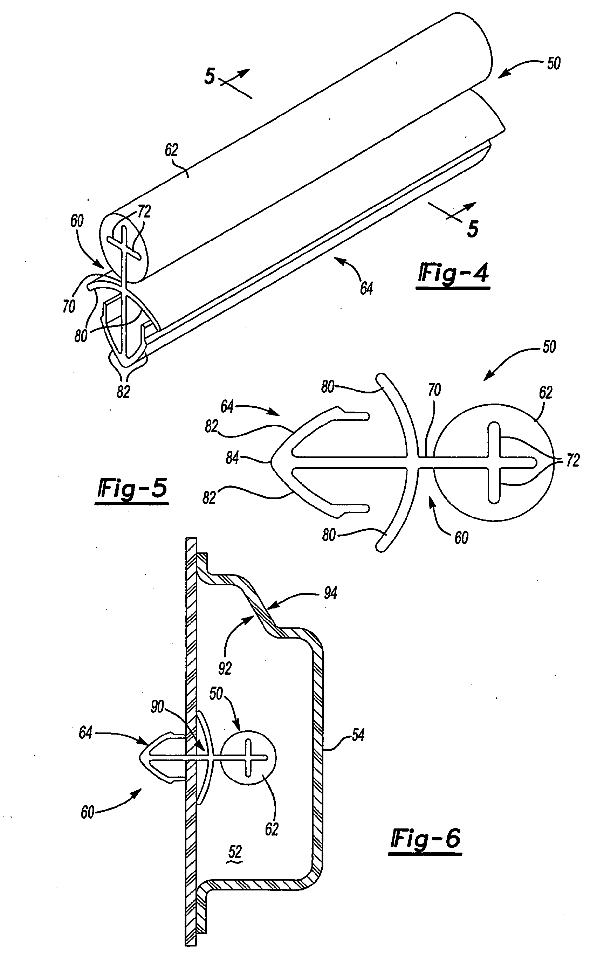

As a second example of a member reference is now made to Figs. 4-6, which illustrate another exemplary member 50 configured for placement within a cavity 52 of a structure 54 of an automotive vehicle (not shown) for forming a baffling, sealing or reinforcement system along with the structure 54 of the automotive vehicle. As will be appreciated, the member 50 may be suited for placement in a variety of cavities for reinforcing, baffling or sealing a variety of structures within the automotive vehicle. For purposes of illustration, the member 50 is shown as being assembled to a pillar structure 54 of an automotive vehicle, although it will be understood that the member 50 may be assembled to a variety of automotive structures (e.g., body members, frame members or the like) or to a variety of structures of other articles of manufacture.

The member 50 is shown as elongated, but may be shortened as desired or need. Generally, the member 50 includes a carrier 60 with an expandable material 62 disposed thereon. The member 50 also includes a fastener 64 attached to the carrier 60.

The carrier 60 may be formed in any of the shapes or configurations discussed herein and may be formed of any of the materials discussed above. In the illustrated embodiment, the carrier 60 includes a base 70 that is substantially planar and generally rectangular. The carrier 60 also includes optional extensions 72 extending away from the base 70.

The skilled artisan will be able to think of a variety of fasteners suitable for use in the member 50 of Figs. 4-6. The fastener 64 shown is comprised of a pair of first extensions 80 and a pair of second extensions 82. It is contemplated, however, that the fastener 64 may be formed with only one first extension, one second extension or both. As shown, one of the first extensions 80 extends from a first side of the base 70 and one of the first extensions 80 extends from a second side of the base 70. Both of the first extensions 80 are illustrated as contoured (e.g., arced) at least partially toward an edge 84 of the base 70. Each of the second extensions 82 extend from the edge 84 of the base 70 respectively toward a different one of the first extensions 80. In alternative embodiments, however, it is contemplated that the first extensions, the second extensions or both may extend in different directions and may extend from different locations than those described.

In the embodiment shown, there is only one fastener 64 that is generally coextensive with the base 70. However, it is contemplated that the fastener 64 may be intermittent and may, therefore, form multiple fasteners. Alternatively, one fastener may be employed that is not substantially coextensive with the base 70.

The expandable material 62 may be any of the expandable materials disclosed herein. In the illustrated embodiment, the expandable material 62 is a material that experiences relatively high levels of expansion upon exposures to temperatures of between about 148.89° C to 204.44°C (about 300°F to 400°F) (i.e., temperatures typically experienced in automotive painting or coating operations). Accordingly, the preferred expandable material 62 is configured to have a volumetric expansion of at least 1500 %, more preferably at least 2000 %, even more preferably at least 2500% and still more preferably at least 3000% its original or unexpanded volume.

The expandable material 62 is generally shaped in a cylindrical configuration, but may be shaped as needed or desired depending upon the application of the member. In the embodiment shown, the expandable material 62 is disposed upon the two opposing surfaces of the base 70 of the carrier 60 and substantially encloses an elongated edge of the carrier 60. Of course, it is contemplated that the material may be otherwise disposed upon the carrier 60.

Generally, the formation of the member 50 includes shaping' of the carrier 60 the fastener 64 or both into a desired configuration and application of the expandable material 62 to the carrier 60. It should be recognized that within this general approach, the member 50 illustrated may be formed using a variety of more specific techniques. For exemplary purposes, however, one preferred technique is described in detail. - Preferably, the fastener 64, the extensions 80, 82, of the fastener 64, the extensions 72 of the base 70, the base 70 or a combination thereof are integrally formed (e.g., extruded, molded or the like) of a single material.

According to the preferred technique, material (i.e., nylon) for the carrier 60 is provided to an extruder (e.g., a twin-screw extruder) and extruded through a first die to produce an extrudate with the sectional configuration of the carrier 60 as shown in Fig. 5. Thereafter or at the same time, the expandable material 62 is also emitted from an extruder (either the same or a different extruder) and both the carrier extrudate and the extruded expandable material or fed to a second extrusion die (preferably in a cross-head die extrusion operation) in a continuous or non-continuous manner. As both, the elongated strip and the expandable material are fed to and through the extrusion die, the expandable material intimately contacts and adheres to the carrier extrudate in the sectional configuration shown in Fig. 2. If desired, the portion of the extrudate onto which the expandable material is extruded may be perforated for improving the strength of attachment between the expandable material and the carrier material.

Generally, a variety of extruders may be employed to form the members, the materials, the carriers, the fasteners, a combination thereof or the like according to the present invention. According to one preferred embodiment of the invention, the extruder employed is a single screw extruder, which may also be known a kneader, a continuous kneader or a co-kneader, but may be a multi-screw (e.g., twin screw extruder). When used, the single screw extruder preferably includes a single segmented screw with interrupted screw flights and stationary pins both located in an extruder barrel. In operation, the single screw extruder preferably performs a distributive type mixing upon whatever material is forming a desired component of the present invention. As an example, such mixing may be obtained by having the screw rotate and reciprocate back and forth at the same time such that the material is mixed due to forward pumping but the material is also divided each time it passes a pin for causing the distributive type mixing.

Advantageously, the single screw extruder, the distributive mixing or both can provide sufficient intermixing of material ingredients while imparting lower energy to the material thereby maintaining and applying the material at a lower temperature. In turn, more reactive or lower activation temperature blowing agents, blowing agent activators or both may be employed particularly for expandable materials. As an example, it is contemplated that such an extruder can maintain and can apply material at temperatures of less than about 150°C, more preferably less than about 120°C and even more preferably less than about 70°C. As an added advantage, it is contemplated that such an extruder is less likely to tear reinforcement fillers such as carbon fibers, glass fibers, nylon fibers or aramid pulp thereby allowing the formation of a material with greater integrity.

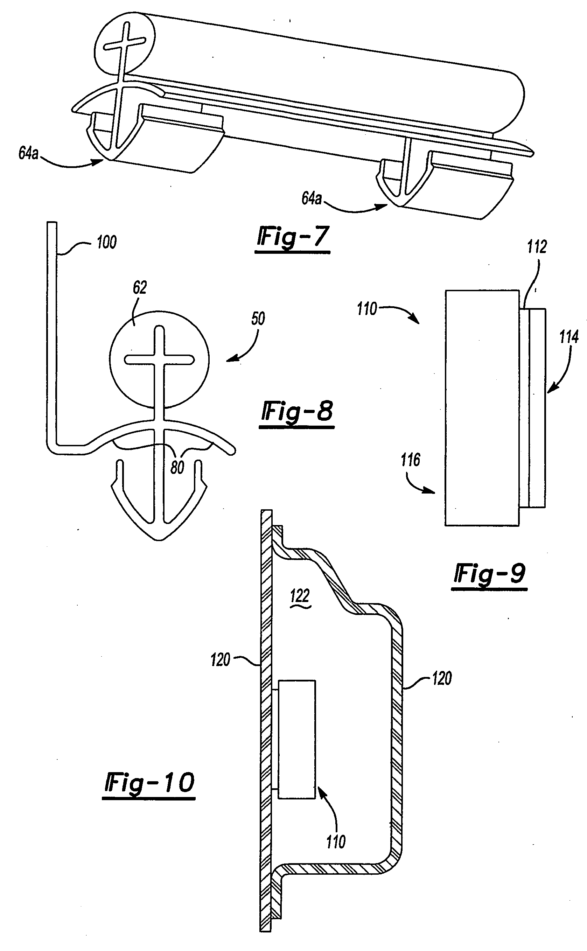

After extrusion, the carrier extrudate and the expandable material are preferably cut at predetermined lengths, which correspond to a length of the member 50. At this juncture, the member 50 is substantially formed as shown in Figs. 4-6. For forming the member 50 with multiple fasteners or with one or more fasteners that are not coextensive with the expandable material 62, portions of the fastener 64, the base 70 or both may be cut away and optionally recycled through the extruder. An example of such a member having two fasteners 64(a), which will operate in the same manner as the fastener 64 of Figs. 4-6 is shown in Fig. 7

Referring again to Figs. 4-6, the carrier 60 is assembled to the structure 54 in Fig. 6 by attaching the fastener[s] 64 to the structure 54. In the particular embodiment illustrated, the pair of second extensions 82 and a portion of the base 70 are extended through an opening 90 (e.g., a through-hole) in the structure 54. Preferably, the extensions 82 are flexed toward each other as they are passed through the opening 90 until they are entirely through the opening 90 such that the extensions 82 can spread away from each other and interference fit the member 50 to the structure 54. Upon creating such an interference fit, the pair of first extensions 80 preferably abut an inner surface 92 of the structure 54 and the second extensions 82 abut an outer surface 94 of the structure 54 thereby limiting motion of the base 70 and the rest of the member 50 relative to the structure 54.

Once assembled- to the structure 54, the expandable material 62 is exposed to heat, which is preferably, although not necessarily, provided during a coating or painting operation performed upon the automotive vehicle. In turn, the heat activates the expandable material 62 to expand (e.g., foam) such that the expandable material 62 contacts, wets and adheres to surfaces 92 of the structure 54 that define the cavity 52. Thus, a system is formed that includes the structure 54 defining the cavity 52 and including the expandable material 62 in an expanded condition at least partially filling the cavity 52 for sealing, baffling, or reinforcing the structure 54. Preferably, the expandable material 62 substantially entirely spans one or more cross-sections (e.g., the cross-section shown is Fig. 6) of the cavity 52 for sealing the cavity 52 such that no openings are available thereby prohibiting the passage of debris, air, water, sound or the like through the cavity 52.

It is contemplated that a member may include one or more extension for assisting in guiding the expansion of the expandable material. For example, in Fig. 8, there is illustrated the member 50 of Figs. 4-6 wherein one of the first extensions 80 includes a further extension 100 extending at an angle relative to the first extension 80 and in generally opposing relation with the expandable material 62.

Referring to Figs. 9 and 10, there is illustrated a member 110 having a carrier 112 that includes a magnetic fastener 114 and an expandable material 116 disposed upon the carrier 112. In the embodiment shown, the carrier 112 is formed as a strip of a plastic material having the magnetic fastener 114 disposed upon the carrier 112 as a magnetic strip. It is contemplated, however, that the carrier 112 and the fastener 114 may include only a magnetic strip such that they are one in the same. As another alternative, it is contemplated that the fastener 114 may be magnetic material (e.g. particles), which are intermixed with the expandable material 116.

For forming the member 110, the expandable material 116 may be applied to the carrier 112, the fastener 114 according a variety of manual, semi-automated or fully automated techniques. For example, the expandable material 116 and the carrier 112, the fastener 114 or both may be coextruded or cross-head extruded according to one of the techniques described for the members describe above.

For application of the member 110 to a structure 120 as shown in Fig. 10, the fastener 114 (i.e., the magnetic material) is expose to a surface (e.g., a metal surface) of the structure 120 to which the fastener is magnetically attracted. In turn, the fastener 114 secures the expandable material 116 in place (e.g., in a cavity 122) until it expands as described in relation to the other embodiments above.

In addition to the magnetic material, it is also contemplated, as discussed above, that a pressure-sensitive material (e.g., a tacky adhesive material, a two-way tape or the like) may be employed in place of the magnetic material as the fastener of the member. In such an embodiment, the pressure-sensitive material could be applied to the expandable material by any of the methods discussed herein (e.g., co-extrusion, manual or automatic methods or the like). Moreover, the pressure-sensitive material may be employed to secure (e.g., adhesively secure) the member to a structure is a manner similar to or the same as that used for the-magnetic material.

### Alternative Embodiments

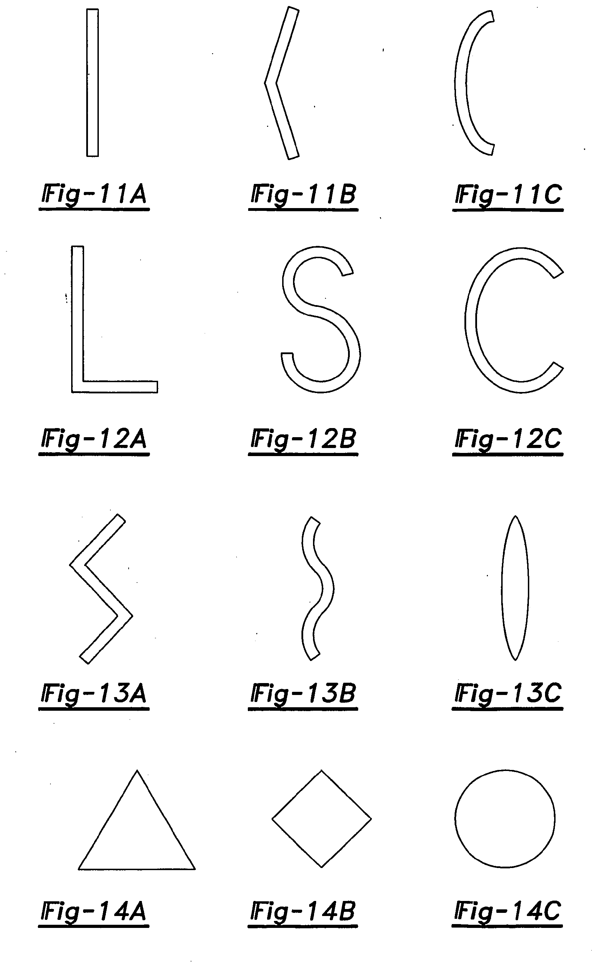

As previously discussed, the fastener, the carrier and the expandable material may be formed in a variety of configurations according to the present invention. For exemplary purposes, several of those shapes and configurations are illustrated in Figs. 11A-18C.

The carrier will typically be formed with a profile, which may be an extrusion profile (i.e., a profile dependent upon the die through which the carrier material is extruded) or a profile based upon the type of material used for the carrier and the manner in which the material is provided. Generally, it is contemplated that dimensions of the profile of the carrier can change (e.g., become thicker or thinner) at different cross-sections taken along a dimension (e.g., a length or other dimension substantially perpendicular to the profile) of the carrier, but typically the dimensions remain substantially uniform.

As respectively shown in Figs. 11A-11B, the carrier may have a straight profile, an angled profile, an arced profile; a combination thereof or the like. As respectively shown in Figs. 12A-12C, the carrier may have an L-shaped profile, an S-shaped profile, a C-shaped profile, a profile shaped according to any other letter of the alphabet, a combination thereof or the like. As respectively shown in Figs. 13A-13C, it is further contemplated that the carrier may have a zig-zag profile, a wavy profile, an oblong profile, a combination thereof or the like. Of course, these profiles are shown for exemplary purposes only and are in no way intended to limit the shape of the carrier.

The expandable material, like the carrier, will also typically be formed with a profile, which may be an extrusion profile (i.e., a profile dependent upon the die through which the expandable is extruded) or a profile based upon the type of material used for the expandable material and the manner in which the expandable material is provided. Generally, it is contemplated that dimensions of the profile of the expandable material can change (e.g., become thicker or thinner) at different cross-sections taken along a dimension (e.g., a length or other dimension substantially perpendicular to the profile) of the expandable material, but typically the dimensions remain substantially uniform.

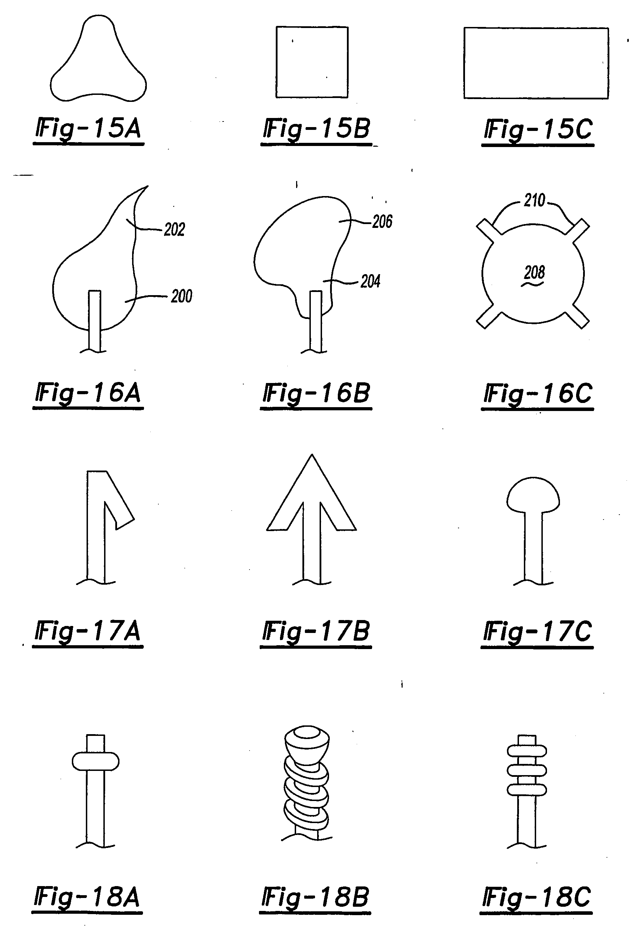

As respectively shown in Figs. 14A-14B, the expandable material may have a triangular profile, a diamond-shaped profile, a circular profile, a combination thereof or the like. As respectively shown in Figs. 15A-15C, the expandable material may have a non-geometric profile, a square profile, a rectangular profile a combination thereof or the like. As respectively shown in Figs. 16A-16B, it is further contemplated that the expandable material may have a profile with a larger base portion 200 attached to a carrier and a smaller extension portion 202 extending therefrom, an extension portion 204 attached to a carrier and extending to a larger base portion 206. In Fig.16 C, there is illustrated a profile of an expandable material having a central base portion 208 and a plurality of extensions 210, which may assist in locating and/or securing the expandable material (e.g., in a cavity). Of course, these profiles are shown for exemplary purposes only and are in no way intended to limit the shape of the carrier.

The fastener, particularly when used to form an interference fit, will typically include one or more protrusions or extensions, which may extend from a portion of the fastener, a portion of the carrier, a portion of the expandable material or a combination thereof for effecting the interference fit. As shown respectively in Figs. 17A-17B, the fastener may include one extension, multiple extensions or a singular thicker portion (e.g. shown as a bulbous protrusion). As shown respectively in Figs. 18A-18C, the fastener may include a single annular protrusion, may be threaded or may include multiple annular protrusions. Again, these fastener configurations are shown for exemplary purposes only and are in no way intended to limit the configuration of the fastener.

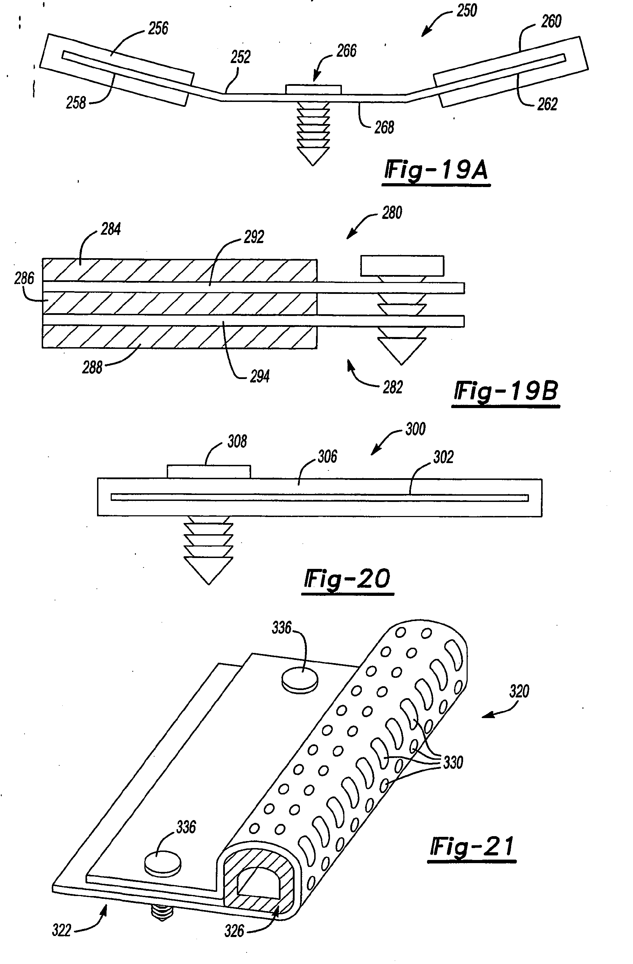

In additional alternative embodiments, it is contemplated that the member may include multiple separate masses of expandable material and the masses may be configured to volumetrically expand the same amount or different amounts relative to each other. As an example, Fig. 19A illustrates a member 250 that includes a polymeric film carrier 252 with a first mass 256 of expandable material on one side 258 of the carrier 252 and a second mass 260 of expandable material on another opposite side 262 of the carrier 252. It can also be seen that the member includes one or more fasteners shown as a push pin 266 extending through one or more openings in a central portion 268 of the carrier 252 between the two masses 256, 260 of expandable material. Fig. 19B illustrates a member 280 that includes a polymeric film carrier 282 with a first mass 284, a second mass 286 and a third mass 288 of expandable material. The carrier 282 is formed of a first polymeric film 292 and a second polymeric film 294. As can be seen, the second mass 286 of expandable material is sandwiched between the first mass 284 of expandable material and the third mass 288 of expandable material and also sandwiched between the first polymeric film 292 and the second polymeric film 294.

In another alternative embodiment shown in Fig. 20, there is a member 300 having a carrier 302 that is a polymeric film and is substantially enclosed within a mass 306 of expandable material. In the embodiment, one or more fasteners shown as a push-pin 308 extend through the carrier 302 and the mass 306 of expandable material.

In still another alternative embodiment shown in Fig. 21, there is a member 320 having a polymeric film carrier 322 that is folded back onto itself such that the carrier 322 is wrapped about a mass 326 of expandable material. A plurality of openings shown as through-holes 330 extend through the carrier 322 at the portion of the carrier 322 that is wrapped about and surrounds the mass 326 of expandable material. Moreover, one or more fasteners shown as push-pins 336 extend through two layers of the polymeric film carrier 322. Advantageously, the mass 326 of expandable material, upon expansion, can flow through the through-holes 330 for adhering to walls of a structure.

It should be understood that the members 250, 280, 300, 320 of Figs. 19A, 19B, 20 and 21 and the other alternative embodiments may be formed and applied according to any of the techniques described herein.

### PREFERRED EXAMPLE MATERIAL

Although several of the preferred expandable materials have been disclosed herein, one particularly preferred expandable material is disclosed below. The expandable material may be used as part of the member or separately. The expandable material preferably expands upon activation by heat or other condition. Preferably, although not required, the expandable material can exhibit relatively high levels of expansion while maintaining homogeneity of expansion and/or without experiencing cohesive failure. Additionally, it has been found that the expandable material is particularly useful in applications such as providing sound absorption, baffling or sealing to articles of manufacture such as automotive vehicles.

In a typical application, the expandable material can assist in providing, baffling, adhesion, sealing, acoustical damping properties, reinforcement or a combination thereof within a cavity of or upon a surface of a structure, or to one or more members (e.g., a body panel or structural member) of an article of manufacture (e.g., an automotive vehicle).

The expandable material preferably includes a combination of three or more of the following components:
(a) up to about 85 parts by weight of a polymeric material admixture such as an admixture of acrylates, acetates or the like;
(b) up to about 20 parts by weight epoxy resin;
(c) up to about 20 parts by weight of a tackifier such as a hydrocarbon resin;
(d) up to about 25 parts by weight blowing agent;
(e) up to about 10 parts by weight curing agent; and
(f) up to about 40 parts by weight filler.

The expandable material of the present invention may be applied to various articles of manufacture for providing acoustical damping to the articles, for sealing the articles or for providing reinforcement to the articles. Examples of such articles of manufacture include, without limitation, household or industrial appliances, furniture, storage containers, buildings, structures or the like. In preferred embodiments, the expandable material is applied to portions of an automotive vehicle such as body or frame members (e.g., a vehicle frame rail) of the automotive vehicle. One method of the present invention contemplates applying the expandable material to a surface of one of the above structures in an unexpanded or partially expanded state and activating the material for expanding it to a volume greater than its volume in the unexpanded state (e.g., 1000% greater, 2000% greater, 2500% greater, 3000% greater, 3500% greater or higher).

Percentages herein refer to weight percent, unless otherwise indicated.

### Polymeric Material Admixture

The preferred expandable material typically includes a polymeric material admixture, which may include a variety of different polymers, such as thermoplastics, elastomers, plastomers combinations thereof or the like. For example, and without limitation, polymers that might be appropriately incorporated into the polymeric admixture include halogenated polymers, polycarbonates, polyketones, urethanes, polyesters, silanes, sulfones, allyls, olefins, styrenes, acrylates, methacrylates, epoxies, silicones, phenolics, rubbers, polyphenylene oxides, terphthalates, acetates (e.g., EVA), acrylates, methacrylates (e.g., ethylene methyl acrylate polymer) or mixtures thereof. Other potential polymeric materials may be or may include, without limitation, polyolefin (e.g., polyethylene, polypropylene) polystyrene, polyacrylate, poly(ethylene oxide), poly(ethyleneimine), polyester, polyurethane, polysiloxane, polyether, polyphosphazine, polyamide, polyimide, polyisobutylene, polyacrylonitrile, poly(vinyl chloride), poly(methyl methacrylate), poly(vinyl acetate), poly(vinylidene chloride), polytetrafluoroethylene, polyisoprene, polyacrylamide, polyacrylic acid, polymethacrylate.

The polymeric admixture typically comprises a substantial portion of the expandable material (e.g., up to 85% by weight or greater). Preferably, the polymeric admixture comprises about 25% to about 85%, more preferably about 40% to about 75% and even more preferably about 50% to about 70% by weight of the expandable material.

The polymeric admixture includes one or more acrylates. The acrylates may include, for example, simple acrylate, methyl acrylate, ethyl acrylate, butyl acrylate, vinyl acrylate, copolymers or combinations thereof or the like. Moreover, any of these acrylates may include other chemical groups such as epoxy, ethylene, butylene, pentene or the like for forming compounds such as ethylene acrylate, ethylene methyl acrylate and so on, and additionally for forming copolymers or combinations thereof or the like. The one or more acrylates typically comprise about 20% or less to about 95% or greater, more preferably about 40% to about 85% and even more preferably about 55% to about 75% by weight of the polymeric admixture.

A preferred acrylate is a copolymer of butyl acrylate and methyl acrylate and more particularly a copolymer of an ethylene butyl acrylate and ethylene methyl acrylate. An example of such a copolymer is sold under the tradename LOTRYL 35BA40 and is commercially available from ATOFINA Chemical, Inc., 2000 Market Street, Philadelphia, PA 19103. Another preferred acrylate is an epoxy modified (e.g., epoxidized) acrylate copolymer. An example of such a copolymer is sold under the tradename ELVALOY 4170 and is commercially available from E. I. Dupont De Nemours and Company, 1007 Market Street, Wilmington, Delaware 19898.

It is also required, that the polymeric admixture include one or more acetates. The acetates may include, for example, acetate, methyl acetate, ethyl acetate, butyl acetate, vinyl acetate, copolymers or combinations thereof or the like. Moreover, any of these acetates may include other chemical groups such as epoxy, ethylene, butylene, pentene or the like for forming compounds such as ethylene acrylate, ethylene methyl acrylate and so on and additionally for forming copolymers or combinations thereof or the like. The one or more acetates typically comprise about 5% or less to about 50% or greater, more preferably about 7% to about 35% and even more preferably about 15% to about 25% by weight of the polymeric admixture.

A preferred acetate is ethylene vinyl acetate (EVA). One example of such an acetate is a relatively high ethylene content EVA sold under the tradename ESCORENE UL-7760, commercially available from ExxonMobil Chemical, 13501 Katy Freeway, Houston, TX 77079-1398. Another example of such an acetate is a relatively low molecular weight/low melt index EVA sold under the tradename ESCORENE UL-MV02514, commercially available from Exxon Mobile Chemical, 13501 Katy Freeway, Houston, TX 77079-1398.

### Epoxy Resin

Epoxy resin is used herein to mean any of the conventional dimeric, oligomeric or polymeric epoxy materials containing at least one epoxy functional group. The polymer-based materials may be epoxy containing materials having one or more oxirane rings polymerizable by a ring opening reaction. In preferred embodiments, the expandable material includes up to about 20 % of an epoxy resin. More preferably, the expandable includes between about 0.1 % and 10% by weight epoxy resin.

The epoxy may be aliphatic, cycloaliphatic, aromatic or the like. The epoxy may be supplied as a solid (e.g., as pellets, chunks, pieces or the like) or a liquid (e.g., an epoxy resin). The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules.

Preferably, an epoxy resin is added to the expandable material to increase properties such as adhesion, cohesion or the like of the material. Additionally, the epoxy resin may strengthen cell structure when the expandable material is a foamable material. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified with butadiene or another polymeric additive.

### Tackifier

A variety of tackifiers or tackifying agents may be included in the expandable material. Exemplary tackifiers include, without limitation, resins, phenolic resins (e.g., thermoplastic phenolic resins), aromatic resins, synthetic rubbers, alcohols or the like. According to one preferred embodiment, a hydrocarbon resin 9 (e.g., a C5 resin, a C9 resin, a combination thereof or the like) is employed as a tackifier. The hydrocarbon resin may be saturated, unsaturated or partially unsaturated (i.e., have 1, 2, 3 or more degrees of unsaturation). One example of a preferred hydrocarbon resin is a coumarone-indene resin. Another example of a preferred hydrocarbon resin is sold under the tradename NORSELENE^{®} S-105 and is commercially available from Sartomer Company, Inc., 502 Thomas Jones Way, Exton, PA 19341.

The tackifer comprises about 6% to 20% by weight of the expandable material. Advantageously, the tackifier may be able to assist in controlling cure rates for producing a more consistent or predictable expansion for the expandable material.

### Blowing Agent

One or more blowing agents may be added to the expandable material for producing inert gasses that form, as desired, an open and/or closed cellular structure within the expandable material. In this manner, it may be possible to lower the density of articles fabricated from the material. In addition, the material expansion helps to improve sealing capability, substrate wetting ability, adhesion to a substrate, acoustic damping, combinations thereof or the like.

The blowing agent may include one or more nitrogen containing groups such as amides, amines and the like. Examples of suitable blowing agents include azodicarbonamide, dinitrosopentamethylenetetramine, 4,4ᵢ-oxy-bis-(benzenesulphonylhydrazide), trihydrazinotriazine and N, Nᵢ-dimethyl-N,Nᵢ-dinitrosoterephthalamide.

An accelerator for the blowing agents may also be provided in the expandable material. Various accelerators may be used to increase the rate at which the blowing agents form inert gasses. One preferred blowing agent accelerator is a metal salt, or is an oxide, e.g. a metal oxide, such as zinc oxide. Other preferred accelerators include modified and unmodified thiazoles or imidazoles, ureas or the like.

Amounts of blowing agents and blowing agent accelerators can vary widely within the expandable material depending upon the type of cellular structure desired, the desired amount of expansion of the expandable material, the desired rate of expansion and the like. Exemplary ranges for the amounts of blowing agents, blowing agent accelerators or both together in the expandable material range from about 0.1 % by weight to about 25 %, more preferably about 2% to about 20% and even more preferably about 7% to about 15% by weight of the expandable material.

Preferably, the formulation of the present invention is thermally activated. However, other agents may be employed for realizing activation by other means, such as moisture, radiation, or otherwise.

### Curing Agent

One or more curing agents and/or curing agent accelerators may be added to the expandable material. Amounts of curing agents and curing agent accelerators can, like the blowing agents, vary widely within the expandable material depending upon the type of cellular structure desired, the desired amount of expansion of the expandable material, the desired rate of expansion, the desired structural properties of the-expandable material and the like. Exemplary ranges for effective amounts of the curing agents, curing agent accelerators of both together present in the expandable material range from about 0 % by weight to about 7 % by weight.

Preferably, the curing agents assist the expandable material in curing by crosslinking of the polymers, epoxy resins (e.g., by reacting in stoichiometrically excess amounts of curing agent with the epoxide groups on the resins) or both. It is also preferable for the curing agents to assist in thermosetting the expandable material. Useful classes of curing agents are materials selected from aliphatic or aromatic amines or their respective adducts, amidoamines, polyamides, cycloaliphatic amines, (e.g., anhydrides, polycarboxylic polyesters, isocyanates, phenol-based resins (such as phenol or cresol novolak resins, copolymers such as those of phenol terpene, polyvinyl phenol, or bisphenol-A formaldehyde copolymers, bishydroxyphenyl alkanes or the like), peroxides or mixtures thereof. Particular preferred curing agents include modified and unmodified polyamines or polyamides such as triethylenetetramine, diethylenetriamine tetraethylenepentamine, cyanoguanidine, dicyandiamides and the like. An accelerator for the curing agents (e.g., a modified or unmodified urea such as methylene diphenyl bis urea, an imidazole or a combination thereof) may also be provided for preparing the expandable material.

Though longer curing times are also possible, curing times of less than 5 minutes, and even less than 30 seconds are possible for the formulation of the present invention. Moreover, such curing times can depend upon whether additional energy (e.g., heat, light, radiation) is applied to the material or whether the material is cured at room temperature.

### Filler

The expandable material may also include one or more fillers, including but not limited to particulated materials (e.g., powder), beads, microspheres, nanoparticles or the like. Preferably the filler includes a relatively low-density material that is generally non-reactive with the other components present in the expandable material.

Examples of fillers include silica, diatomaceous earth, glass, clay, talc, pigments, colorants, glass beads or bubbles, glass, carbon ceramic fibers, antioxidants, and the like. Such fillers, particularly clays, can assist the expandable material in leveling itself during flow of the material. The clays that may be used as fillers may include nanoparticles of clay and/or clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite or mixtures thereof. The clays may also include minor amounts of other ingredients such as carbonates, feldspars, micas and quartz. The fillers may also include ammonium chlorides such as dimethyl ammonium chloride and dimethyl benzyl ammonium chloride. Titanium dioxide might also be employed.

In one preferred embodiment, one or more mineral or stone type fillers such as calcium carbonate, sodium carbonate or the like may be used as fillers. In another preferred embodiment, silicate minerals such as mica may be used as fillers. It has been found that, in addition to performing the normal functions of a filler, silicate minerals and mica in particular improved the impact resistance of the cured expandable material.

The fillers in the expandable material can range from 1 % to 90 % by weight of the expandable material. According to some embodiments, the expandable material may include from about 3 % to about 30 % by weight, and more preferably about 10 % to about 20 % by weight clays or similar fillers.

It is contemplated that one of the fillers or other components of the material may be thixotropic for assisting in controlling flow of the material as well as properties such as tensile, compressive or shear strength.

### Other Additives

Other additives, agents or performance modifiers may also be included in the expandable material as desired, including but not limited to a UV resistant agent, a flame retardant, an impact modifier, a heat stabilizer, a UV photoinitiator, a colorant, a processing aid, an anti-oxidant, a lubricant, a coagent, a reinforcement (e.g., chopped or continuous glass, glass fiber, ceramics and ceramic fibers, aramid fibers, aramid pulp, carbon fiber, acrylate fiber, polyamide fiber, polypropylene fibers, combinations thereof or the like). In one preferred embodiment, for example, an acrylate coagent may be employed for enhancing cure density. It is also contemplated that the expandable material may include about 0.10 to about 5.00 weight percent of an anti-oxidant such as a propionate (e.g., pentaerythritol tetrakis (3-(3,5-di-tert-butyl-4-hydroxyphenyl) propionate)) for assisting in controlling oxidation, cure rate or both. An example of such an anti-oxidant is sold under the tradename IRGANOX^{®} 1010 and is commercially available from Ciba Specialty Chemicals Company, 141 Klybeckstrasse, Postfach, 4002 Basel, Switzerland.

When determining appropriate components for the expandable material, it may be important to form the material such that it will only activate (e.g., flow, foam or otherwise change states) at appropriate times or temperatures. For instance, in most applications, it is undesirable for the material to be reactive at room temperature or otherwise at the ambient temperature in a production environment. More typically, the expandable material becomes activated to flow at higher processing temperatures. As an example, temperatures such as those encountered in an automobile assembly plant may be appropriate, especially when the expandable material is processed along with the other components at elevated temperatures or at higher applied energy levels, e.g., during painting preparation steps. Temperatures encountered in many coating operations (e.g., in a paint curing oven), for instance, range up to about 180 °C or higher, 200 °C or higher, 250°C or higher.

For mixing the additives, fillers or both, it may be preferable for the additives or fillers to be mixed with a dispersant prior to mixing them with the other ingredients of the expandable material. Such a dispersant will typically have a relatively low molecular weight of less than about 100,000 amu, more preferably less than about 50,000 amu and still more preferably less than about 10,000 amu, although not required. Examples of such dispersants include, without limitation, liquid waxes, liquid elastomers or the like such as ethylene-propylene rubber (EPDM), paraffins (e.g., paraffin wax).

When the material is expandable, it is possible to make a family of materials according to the present invention wherein the members of the family have different expansion levels. Such a family is, at least in part, may be formed by varying the amount of blowing agent, blowing agent accelerator or both. For exemplary purposes, table A is provided below for showing amounts of blowing agents and/or blowing agent accelerators for one particular family that may be formed according to the present invention along with exemplary levels of expansion for materials in the family.

**Table A**

| Weight Percent of Blowing Agent, Blowing Agent Accelerator or Both | Percent Volume of Expanded Material as Compared to Non-Expanded Material |
|---|---|
| Up to 1.5% or 2.0% or greater | Up to About 300% to about 400% or greater |
| Up to 3.0% or 3.5% or greater | Up to About 700% to about 800% or greater |
| Up to 5.0% or 5.5% or greater | Up to About 1150% to about 1250% or greater |
| Up to 7.0% or 8% or greater | Up to About 1550% to about 1750% or greater |
| Up to 9.0% or 10% or greater | Up to About 2100% to about 2250% or greater |
| Up to 13% or 14% or greater | Up to About 2900% to about 3000% or greater |

For balancing out the formulation, it may be desirable for a filler (e.g., a mineral filler) to replace the weight percent of blowing agent or blowing agent accelerator that is removed for materials having lower expansion. As an example, if 5 weight percent of the material is removed by removing blowing agent or accelerator, it may be desirable to replace the 5 weight percent with filler.

### Highly Preferred Embodiments and Examples

It is contemplated within the present invention that polymers or other materials other than those discussed above may also be incorporated into the expandable material, e.g., by copolymerization, by blending, or otherwise. Below, exemplary formulations of the expandable material are provided Since they are merely exemplary, it is contemplated that the weight percents of the various ingredients may vary by ± 75% or more or by ± 50% or ± 30%. Moreover, ingredients may be added or removed from the formulations.

### EXAMPLE

Table B shows a formulation for one exemplary expandable material.

**TABLE B**

| **Ingredient name:** | **% by weight** |
|---|---|
| Copolymer of Ethylene Butyl Acrylate and Ethylene Methyl Acrylate | 34.20 |
| High Ethylene content Ethylene Vinyl Acetate | 15.00 |
| Epoxy Modified Acrylate Copolymer | 6.00 |
| Low Molecular Weight Ethylene Vinyl Acetate | 6.00 |
| Epoxy resin | 1.00 |
| A tackifier resin or agent (e.g., a hydrocarbon resin, a rosin ester, a terpentine) | 11.70 |
| Acrylate coagent for cure density control (e.g., dipentaerythritol pentaacrylate) | 0.60 |
| Curing agent (e.g., peroxide based curing agent) | 1.50 |
| Curing agent - 60°C-110°C activation | 0.20 |
| Americure curing agent | 0.10 |
| Blowing agent accelerator (e.g., Zinc Oxide) | 1.50 |
| Blowing agent (e.g., azodicarbonamide) | 9.00 |
| Around 30% Aramid pulp + around 70% EPDM | 1.0 |
| Pigment | 0.2 |
| Calcium carbonate | 11.5 |
| Anti-oxidant | 0.5 |

### Formation and Application of the Expandable Material

Formation of the expandable material can be accomplished according to a variety of new or known techniques. Preferably, the expandable material is formed as a material of substantially homogeneous composition. However, it is contemplated that various combining techniques may be used to increase or decrease the concentration of certain components in certain locations of the expandable material.

According to one embodiment, the expandable material is formed by supplying the components of the material in solid form such as pellets, chunks and the like, in liquid form or a combination thereof. The components are typically combined in one or more containers such as large bins or other containers. Preferably, the containers can be used to intermix the components by rotating or otherwise moving the container. Thereafter, heat, pressure or a combination thereof may be applied to soften or liquidize the components such that the components can be intermixed by stirring or otherwise into a single homogenous composition.

According to another embodiment, the expandable material may be formed by heating one or more of the components that is generally easier to soften or liquidize such as the polymer based materials to induce those components into a mixable state. Thereafter, the remaining components may then be intermixed with the softened components. It should be understood that the various ingredients of the expandable material may be combined in any desired order. Moreover, the component of the polymeric admixture may be mixed together and then added to the other ingredients or may be combined with the other ingredients in any other order.

Depending upon the components used, it may be important to assure that the temperature of the components remains below certain activation temperatures that might cause the expandable material to activate (e.g., form gasses, flow or otherwise activate), cure (e.g., harden, stiffen or otherwise change states) or both. Notably, when the expandable material contains a blowing agent, it is typically desirable to maintain the temperature of the expandable material below a temperature that will activate the blowing agent during formation of the expandable material or before the expandable material is applied to a surface.

In situations where it is desirable to maintain the expandable material at lower temperatures it may be desirable to maintain the components in a semi-solid or viscoelastic state using pressure or a combination of pressure and heat to intermix the components of the expandable material. Various machines have been designed to applying heat, pressure or both to materials. One preferred machine is an extruder. Various components may be premixed into one, two or more pre-mixtures and introduced at one or various locations in a single or twin-screw extruder. Thereafter, the heat and pressure provided by the extruder mixes the expandable material in a single generally homogeneous composition, and preferably does so without activating the material.

Activation of the material may include at least some degree of foaming or bubbling in situations where the expandable material includes a blowing agent. Such foaming or bubbling can assist the expandable material in wetting a substrate and forming an intimate bond with the substrate. Alternatively, however, it shall be recognized that the expandable material may be activated to flow without foaming or bubbling and may still substantially wet the substrate to form an intimate bond. Formation of the intimate bond will typically but not necessarily occur upon curing of the expandable material. In one embodiment, a robotic extrusion applicator is employed, e.g., of the type disclosed in U.S. Patent No. 5,358,397.

Other applications for which the present technology may be adapted or employed as an expandable material include those of the type identified in U.S. Patent Nos. 6,358,584; 6,311,452; 6,296,298. The material of the present invention may thus be applied to a carrier, such as a molded, extruded or stamped member (e.g., metal or plastic, foamed or unfoamed; exemplary materials of which include aluminum, magnesium, titanium, steel, polyamide (e.g., nylon 6 or nylon 6,6), polysulfone, thermoplastic imide, polyether imide, polyether sulfone or mixtures thereof.

Advantageously, certain embodiments of the present invention have exhibited relatively high levels of expansion coupled with homogeneity and/or cohesiveness during such expansion. Thus, upon expansion, the expandable material can fill relatively large open spaces (e.g., cavities) while exhibiting improved properties for sealing, baffling, sound absorption or the like.

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components.

## Claims

1. An expandable material, comprising:
10% to 70% by weight of a polymeric admixture, the polymeric admixture including one or more acrylate containing polymers and one or more acetate containing polymers;
6.0% to 20% tackifier;
blowing agent, blowing agent accelerator or both;
a curing agent; and
one or more fillers **characterised in that** the one or more acrylate containing polymers comprise 20% to 95% of the polymeric admixture and the one or more acetate containing polymers comprise 5% to 50% of the polymeric admixture.

2. An expandable material as in claim 1 further comprising a dispersant.

3. An expandable material as in claim 2 wherein the dispersant is selected from a paraffin wax or an EPDM.

4. An expandable material as in any of claims 1 to 3 wherein the one or more fillers includes an aramid pulp.

5. An expandable material as in any of claims 1 to 4 wherein the tackifier is selected from a resin, a rubber or an alcohol.

6. An expandable material as in any of claims 1 to 5 wherein, upon exposure to elevated temperature, the expandable material volumetrically expands to at least 2000% of its original size.

7. An expandable material as in any of claims 1 to 6 further comprising 0.1 % to 10% by weight epoxy resin.

8. An expandable material as in any of claims 1 to 7 wherein the blowing agent, blowing agent accelerator or both comprise at least 8% by weight of the expandable material, the blowing agent being selected from an amine or amide and the blowing agent accelerator being selected from a metal salt or an oxide.

9. An expandable material as in any of claims 1 to 8 wherein the curing agent includes a peroxide based curing agent.

10. An expandable material as in any of claim 1 to 9 wherein the one or more filler represent 3% to 30% by weight of the expandable material and includes calcium carbonate.

## Patentansprüche

1. Aufschäumbares Material, das umfasst:
10 bis 70 Gewichtsprozent einer polymeren Beimischung, wobei die polymere Beimischung ein oder mehrere acrylathaltige Polymere und ein oder mehrere acetathaltige Polymere enthält;
6.0 % bis 20 % Klebrigmacher;
Treibmittel, Treibmittelbeschleuniger oder beides;
Aushärtungssmittel; und
einen oder mehrere Füllstoffe, **dadurch gekennzeichnet, dass** das eine oder die mehreren acrylathaltigen Polymere 20 % bis 95 % der polymeren Beimischung umfassen und das eine oder die mehreren acetathaltigen Polymere 5 % bis 50 % der polymeren Beimischung umfassen.

2. Aufschäumbares Material gemäß Anspruch 1, das weiterhin ein Dispersionsmittel umfasst.

3. Aufschäumbares Material gemäß Anspruch 2, wobei das Dispersionsmittel aus einem Paraffinwachs oder einem EPDM ausgewählt wird.

4. Aufschäumbares Material gemäß einem der Ansprüche 1 bis 3, wobei der eine oder die mehreren Füllstoffe Aramidpulp umfassen.

5. Aufschäumbares Material gemäß einem der Ansprüche 1 bis 4, wobei der Klebrigmacher aus einem Harz, einem Gummi oder einem Alkohol ausgewählt wird.

6. Aufschäumbares Material gemäß einem der Ansprüche 1 bis 5, wobei sich das aufschäumbare Material, nachdem es einer erhöhten Temperatur ausgesetzt war, auf mindestens 2000 % seines ursprünglichen Volumens ausdehnt.

7. Aufschäumbares Material gemäß einem der Ansprüche 1 bis 6, das weiterhin 0,1 bis 10 Gewichtsprozent Epoxydharz umfasst.

8. Aufschäumbares Material gemäß einem der Ansprüche 1 bis 7, wobei das Treibmittel, der Treibmittelbeschleuniger oder beide mindestens 8 Gewichtsprozent des aufschäumbaren Materials umfassen, wobei das Treibmittel aus einem Amin oder Amid ausgewählt wird und der Treibmittelbeschleuniger aus einem Metallsalz oder einem Oxid ausgewählt wird.

9. Aufschäumbares Material gemäß einem der Ansprüche 1 bis 8, wobei das Vernetzungsmittel ein peroxydbasiertes Aushärtungsmittel umfasst.

10. Aufschäumbares Material gemäß einem der Ansprüche 1 bis 9, wobei der eine oder die mehreren Füllstoffe 3 bis 30 Gewichtsprozent des aufschäumbaren Materials ausmachen und Calciumcarbonat umfassen.

## Revendications

1. Matériau expansible, comprenant :
10 % à 70 % en poids d'un mélange polymère, le mélange polymère incluant un ou plusieurs polymères contenant un acrylate et un ou plusieurs polymères contenant un acétate ;
6,0 % à 20 % d'agent collant ;
un agent d'expansion, un accélérateur pour agent d'expansion, ou les deux ;
un agent durcisseur ; et
une ou plusieurs charges,
**caractérisé en ce que** le ou les polymères contenant un acrylate représentent 20 % à 95 % du mélange polymère et le ou les polymères contenant un acétate représentent 5 % à 50 % du mélange polymère.

2. Matériau expansible selon la revendication 1, comprenant en outre un dispersant.

3. Matériau expansible selon la revendication 2, dans lequel le dispersant est choisi parmi une cire de paraffine ou un EPDM.

4. Matériau expansible selon l'une quelconque des revendications 1 à 3, dans lequel la ou les charges incluent une pâte d'aramide.

5. Matériau expansible selon l'une quelconque des revendications 1 à 4, dans lequel l'agent collant est choisi parmi une résine, un caoutchouc ou un alcool.

6. Matériau expansible selon l'une quelconque des revendications 1 à 5, lequel matériau expansible, par exposition à une température élevée, se dilate volumétriquement à au moins 2 000 % de sa dimension d'origine.

7. Matériau expansible selon l'une quelconque des revendications 1 à 6, comprenant en outre 0,1 % à 10 % en poids de résine époxy.

8. Matériau expansible selon l'une quelconque des revendications 1 à 7, dans lequel l'agent d'expansion, l'accélérateur pour agent d'expansion ou les deux représentent au moins 8 % en poids du matériau expansible, l'agent porogène étant choisi parmi une amine ou un amide et l'accélérateur pour agent d'expansion étant choisi parmi un sel ou un oxyde métallique.

9. Matériau expansible selon l'une quelconque des revendications 1 à 8, dans lequel l'agent durcisseur inclut un agent durcisseur à base de peroxyde.

10. Matériau expansible selon l'une quelconque des revendications 1 à 9, dans lequel la ou les charges représentent 3 % à 30 % en poids du matériau expansible et incluent le carbonate de calcium.
